# EUROPÄISCHE PATENTSCHRIFT

(11) **EP 0 551 536 B1**
(45) Veröffentlichungstag und Bekanntmachung des Hinweises auf die Patenterteilung: **07.05.1997**
(21) Anmeldenummer: 92100436.2
(22) Anmeldetag: 13.01.1992
(51) Int. Cl.: B23Q 5/22, B27F 5/12, B27M 1/08

(54) **Vorrichtung und Verfahren zur spanenden Bearbeitung von Platten, insbesondere aus verleimtem Sperrholz**
Device and process for machine-tooling of plates, especially of glued plywood
Dispositif et procédé pour l'usinage de plaques, en particulier de contreplaqué collé

(43) Veröffentlichungstag der Anmeldung: 21.07.1993
(73) Patentinhaber: FRITZ NEIDHART KG HOLZWERK, D-82362 Weilheim (DE)
(72) Erfinder: Neidhart, Fritz, Dipl.-Ing., W-8120 Weilheim (DE)
(74) Vertreter: Beetz & Partner Patentanwälte

(56) Entgegenhaltungen:
- US-A- 4 485 857

## Beschreibung

Die vorliegende Erfindung betrifft eine Vorrichtung und ein Verfahren zur spanenden Bearbeitung von Platten, insbesondere aus verleimtem Sperrholz, Preßspan oder aus Kunststoffmaterialien nach den Oberbegriffen der Ansprüche 1 und 9.

Platten aus verleimtem Sperrholz werden als Ausgangsmaterial zur Herstellung von Containern verwendet, die in der Industrie zum Versand von Halbfertigteilen, Ersatzteilen, Schüttgut und mit einem Foliensack versehen, auch zum Transport von Flüssigkeiten breite Verwendung finden. Diese wiederverwendbaren Container sind nach der Ankunft am Bestimmungsort zerlegbar und können in zerlegtem Zustand zum Absender zur dortigen neuerlichen Verwendung zurückgeschickt werden. Die Befestigung der Seitenwände untereinander bzw. mit einer Bodenpalette und einem Deckel erfolgt über die Kanten umspannende Klammern, die in den jeweiligen Seitenwänden bzw. Deckel und Bodenplatten in entsprechende Nuten eingreifen. Diese Art der Befestigung der Bestandteile eines Sperrholzcontainers aneinander erfordert eine hohe Passgenauigkeit der einzelnen Bestandteile, sowie ein Kantenfinish, das ein gefahrloses Handhaben der Platten gewährleistet.

Diese hohen Anforderungen an die Bearbeitung der Platten konnten bislang nur durch eine Fertigung sichergestellt werden, die mit einem hohen Aufwand an Handarbeit verbunden war. So erforderten beispielsweise verschiedene Arbeitsgänge wie das Ausarbeiten des Kantenprofils und das Fräsen von Nuten für die Klammern Geräte, die mit stark verschiedenen Vorschubgeschwindigkeiten arbeiteten und die jeweils von Hand beschickt wurden. Nach dem Arbeitsgang wurden die bearbeiteten Platten gestapelt und im Stapel der nächsten Bearbeitsmaschine zugeführt, die wiederum von einer Bedienungsperson betätigt bzw. überwacht wurde. Je nach Ausstoß der einzelnen Bearbeitungsgeräte wurden an der nächstfolgenden Bearbeitungsetappe unkoordiniert die zugearbeiteten Platten angeliefert bzw. herrschte Mangel an zu bearbeitenden Platten, da die vorhergehende Etappe pro zu bearbeitende Platte mehr Zeit benötigte, als dies bei der nachfolgenden Maschine der Fall war. Eine sinnvolle Koordination der Arbeitsabläufe, die zu einer flüssigen Bearbeitung der Platten führt, war unter diesen Umständen nicht möglich. Auch die Automatisierungsbestrebungen litten unter den oben aufgezeigten Mängeln, was schließlich die erzielbare Gesamt-Herstellungsgeschwindigkeit erheblich einschränkt.

Aufgabe der vorliegenden Erfindung ist es, eine Vorrichtung und ein Verfahren zur spanenden Bearbeitung von Platten, insbesondere aus verleimtem Sperrholz, anzugeben, die bzw. das vollkommen automatisiert mit größtmöglicher Sicherheit, Genauigkeit und hoher Durchsatzgeschwindigkeit arbeitet.

Diese Aufgabe wird mit den Merkmalen der Ansprüche 1 und 9 gelöst.

In den Unteransprüchen sind Merkmale bevorzugter Ausführungsformen gekennzeichnet.

Gemäß einem Aspekt der vorliegenden Erfindung wird die Fördergeschwindigkeit der Platten an den einzelnen Bearbeitungsstationen und zwischen diesen stets nach der maximal zulässigen Vorschubgeschwindigkeit des Bearbeitungsprozesses ausgelegt, der die kleinste der maximalen Vorschubgeschwindigkeiten hat. Gleichzeitig werden Maßnahmen getroffen, um diese kleinste maximale Vorschubgeschwindigkeit so weit wie möglich anzuheben. Dies wird erreicht durch eine hochtourige Auslegung der spanenden Bearbeitungsgeräte, durch extremen Leichtbau zur Minimierung der zu bewegenden Massen, sowie durch Minimierung der Differenz zwischen verschiedenen Geschwindigkeitsstufen, um Beschleunigungs- bzw. Verzögerungsintervalle so kurz wie möglich zu halten.

Durch die zeitweise parallele Durchführung verschiedener Arbeitsgänge mit einer Vorschubgeschwindigkeit, die durch das Bearbeitungsgerät mit der kleinsten maximalen zulässigen Vorschubgeschwindigkeit vorgegeben wird, wird der Bearbeitungsprozeß verkontinuierlicht, und Materialstau bzw. ein Mangel an zu bearbeitenden Platten vor einer Bearbeitungsstation werden vermieden.

Die Bestückung der Zuführstation bzw. der Entnahmestation mit durch Gabelstapler handhabbare Plattenstapel ermöglicht eine sehr schnelle und rationelle Bestückung bzw. Entsorgung der Bearbeitungsstrecke, die aufgrund der Automatisierung mit hoher Geschwindigkeit erfolgt.

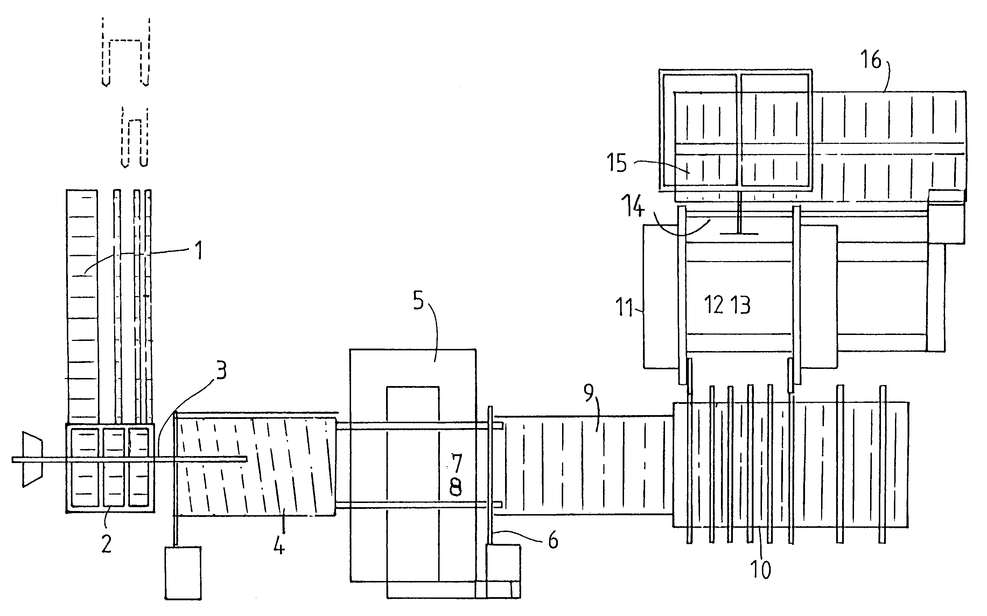

Im folgenden wird die Erfindung anhand der Beschreibung eines Ausführungsbeispiels unter Bezugnahme auf die Zeichnung näher erläutert. Darin zeigt die einzige Figur die Plattenbearbeitungsvorrichtung schematisch in Draufsicht.

In der Figur ist mit 1 eine mit Rollen versehene Ablagefläche bezeichnet, auf der mit Gabelstaplern oder Hubwagen Stapel von zu bearbeitenden Platten abgelegt werden können. Zu diesem Zweck weist die Ablagefläche mehrere Rinnen in Beladerichtung auf, in die die Gabeln eines Gabelstaplers bzw. eines Hubwagen eingreifen können.

Von dieser Beladefläche aus wird der angelieferte Plattenstapel auf eine sich daran anschließende hydraulisch betätigte Hebebühne 2 verschoben, deren Höhe anschließend so gesteuert wird, daß die oberste Platte des Plattenstapels auf der Höhe der sich an die Hebebühne anschließenden Förderstrecke 4 befindet. Ein Schieber 3 greift in Förderrichtung der Vorrichtung 4 gesehen an der hinteren Kante der obersten Platte des Plattenstapels an und zieht diese auf den Schrägrollengang der Fördereinrichtung, von wo aus die zu bearbeitende Platte in einer ersten Bearbeitungsstation 5 eingeführt wird. Die Hebebühne 2 hebt den Plattenstapel nach jedem Abschieben einer jeden Platte, um den Betrag der Dicke einer jeden Platte, um ein problemloses Überführen der nächsten Platte zu ermöglichen. In der Bearbeitungsstation 5 findet die Bearbeitung der in Förderrichtung verlaufenden Plattenkanten statt, sowie das Anbringen der Nuten, in die die Federstahlklammern beim Zusammensetzen der Container eingreifen. Während die Kantenbearbeitung naturgemäß entlang der gesamten Plattenlänge erfolgt, werden Nuten nur in vorbestimmten Abständen zueinander und in gegebenenfalls mehreren Abständen vom Plattenrand entfernt angebracht. Während die Kantenbearbeitung und Falz-Herstellung mit einer Vorschubgeschwindigkeit von 15 bis 20 m/min erfolgen kann, erlaubt das Fräsen der Schlitze lediglich einen werkzeugbedingten Vorschub von 4 bis 5 m/min. Für die Fördergeschwindigkeit der zu bearbeitenden Platten durch die Bearbeitungsstation 5 hindurch bedeutet das, daß die Platten mit einer Fördergeschwindigkeit von 15 bis 20 m/min dem Doppelendprofiler zugeführt wird und eine Programmsteuerung, die die Vorschubgeschwindigkeit auf einen Wert zwischen 4 und 5 m/min reduziert, wenn eine Stelle erreicht wird , an der ein Schlitz gefräst werden soll. Die Bearbeitung der Kanten mit dem Doppelendprofiler erfolgt parallel zur Herstellung der Schlitze ebenfalls mit der reduzierten Vorschubgeschwindigkeit. Sobald der einflutige Fingerfräser sich wieder von der Plattenunterseite gelöst hat, wird die Vorschubgeschwindigkeit wieder auf einen Wert zwischen 15 und 20 m/min erhöht, bis die Programmsteuerung den Zeitpunkt für das Fräsen des nächsten Schlitzes erkennt. Die mittlere Vorschubgeschwindigkeit pro zu bearbeitender Platte in der Bearbeitungsstation 5 ergibt sich somit aus dem Verhältnis der Summe der Schlitzlängen zu der Restlänge einer Platte, die nicht mit Schlitzen versehen ist.

Wenn diese Geschwindigkeit bei der Steuerung des Greifarms 3 berücksichtigt wird, ist ein kontinuierlicher Bearbeitungsfluß möglich. Der Antrieb des Vorschubs in der Bearbeitungsstation 5 weist bei diesem Ausführungsbeispiel zwei hydraulische Pumpen auf, wobei eine erste Pumpe die niedrige Vorschubgeschwindigkeit für den Schlitz-Fräsvorgang gewährleistet und über ein Ventil die Förderleistung der zweiten Pumpe hinzugeschaltet wird, um die Vorschubgeschwindigkeit für die reine Kantenbearbeitung zu erreichen. Um die Beschleunigungs- bzw. Verzögerungsphasen zwischen den verschiedenen Vorschubgeschwindigkeitsstufen so gering wie möglich zu halten und um generell die Bearbeitungsgeschwindigkeit zu steigern, wird versucht, die Geschwindigkeitsdifferenz zwischen den verschiedenen Bearbeitungsschritten so klein wie möglich zu halten. Dies wird dadurch erreicht, daß die Vorschubgeschwindigkeit beim Schlitzfräsen optimiert wird. Zu diesem Zweck werden folgende Maßnahmen getroffen: Einerseits wird die Drehzahl des Einsatzfräsers auf das maximal technisch mögliche Niveau angehoben. Dies erfordert eine ebenfalls hohe Geschwindigkeit, mit der die Späne aus dem Fräsbereich entfernt werden. Zu diesem Zweck wurde ein spezieller einflutiger Fingerfräser entwickelt, der einen ausreichend großen Freiraum für die zu entfernenden Späne aufweist, die somit nicht den Abräumbereich des Fingerfräsers verstopfen. Der Fingerfräser greift in der Bearbeitungsstation von der Unterseite der zu bearbeitenden Platte her an, was den Vorteil bringt, daß die Späne von alleine aus dem Fräsbereich nach unten herausfallen. Der Antrieb des Fingerfräsers ist voll gekapselt, um gegen eine Verunreinigung durch Späne und Sägemehl gesichert zu sein. Diese Maßnahme erhöht die Einsatzsicherheit und Lebensdauer des Fräserantriebs, bedeutet aber andererseits, daß der Fräser zusammen mit dem Antrieb bewegt werden muß. Um diese Bewegung zu beschleunigen und die Hubvorrichtung so klein wie möglich auslegen zu können, wird der Fräserantrieb in extremer Leichtbauweise gefertigt. Das heißt, es werden überall dort, wo es möglich ist, leichte Werkstoffe verwendet und stromführende Elemente auf hohe Frequenz (hier 300 Hz) und niedrige Ströme ausgelegt.

Eine weitere Steigerung der Vorschubgeschwindigkeit des Einsatzfräsers bei ausreichender Standzeit erfordert die Verwendung von diamantbestückten Schneiden.

Nach dem Anbringen der Schlitze und der Bearbeitung der in Vorschubrichtung verlaufenden Kanten der Platten werden diese über eine Förderstrecke 9 einer Umlenk- und Zuführstation 10 zugeführt, die die Plattenorientierung unverändert läßt und die Förderrichtung um 90 ° ändert, so daß nunmehr die beiden noch nicht behandelten Kanten der Platten in Förderrichtung liegen. Mit dieser Orientierung tritt die zu bearbeitende Platte in die zweite Bearbeitungsstation 11 ein, die im wesentlichen analog zu der Bearbeitungsstation 5 aufgebaut ist. Die Bearbeitungsstation 11 ist darüber hinaus so ausgelegt, daß sie Plattenbreiten bis zu maximal 5,5 Metern aufnehmen kann. Auch hier erfolgt wiederum das intermittierende Umschalten der Vorschubgeschwindigkeiten von einer höheren Geschwindigkeit, mit der die Kanten bearbeitet werden, auf die niedrige Fräsvorschubgeschwindigkeit, sobald die Programmsteuerung das Anbringen von Schlitzen vorsieht. Der Vorschub erfolgt hier über einen ebenfalls hydraulischen Förderantrieb 14, der unabhängig von dem Hydraulikantrieb 6 der Bearbeitungsstation 5 gesteuert wird. Die die Bearbeitungsstation 11 verlassenden nunmehr fertig bearbeiteten Platten werden mit Hilfe eines Schiebers auf einer Hebebühne 15 gestapelt. Die Hebebühne senkt sich nach Aufnahme einer jeden Platte um den Betrag einer Plattendicke ab, um ein problemloses Überführen der Platte von der Fördereinrichtung auf den Plattenstapel zu ermöglichen. Wenn der Plattenstapel eine bestimmte Plattenanzahl erreicht hat, wird er auf ein mit Rollen versehenen Entnahmebereich geschoben, wo er wiederum von einem Gabelstapler oder Hubwagen entnommen wird.

Die Bearbeitung der Platten erfolgt von der Zufuhr der unbearbeiteten Platten bis zu deren Entnahme vollautomatisch und die gesamte Anlage wird von einer Bedienungsperson überwacht. Die Durchsatzgeschwindigkeit ergibt sich aus den maximalen Vorschubgeschwindigkeiten der Bearbeitungsvorgänge und ein Zeitverlust durch sequenzielle Ausführung der verschiedenen Arbeitsgänge nacheinander wird vermieden. Die Verwendung leichter zu bewegender Bauelemente verringert Beschleunigungs- und Verzögerungsphasen und erhöht die Schaltgeschwindigkeit, was ebenfalls zur Erhöhung der Gesamt-Durchsatzgeschwindigkeit der Vorrichtung beiträgt.

Die Erläuterung des in der Figur gezeigten Ausführungsbeispiels ist nicht einschränkend zu verstehen, sondern dient lediglich zur Erläuterung der beanspruchten Erfindung.

## Patentansprüche

1. Vorrichtung zur spanenden Bearbeitung von Platten, insbesondere aus verleimtem Sperrholz, Preßspan oder aus Kunststoffmaterialien, mit
- einer Plattenzuführstation (1; 2),
- mehreren Bearbeitungsstationen (5; 11),
- einer Fertigplatten-Entnahmestation (15, 16), und
- einer Fördereinrichtung (4, 9; 10) zum Transport der zu bearbeitenden Platten zwischen den einzelnen Stationen,
**dadurch gekennzeichnet,** daß
- mindestens eine Bearbeitungsstation (5, 11) Bearbeitungsgeräte (7, 8, 12, 13) zur zumindest abschnittsweise gleichzeitigen Ausführung unterschiedlicher Arbeitsgänge an den Platten in Vorschubrichtung aufweist, deren Werkzeuge jeweils mit einer Geschwindigkeit betrieben werden, die die für den speziellen Arbeitsgang maximale Vorschubgeschwindigkeit erlaubt,
- daß eine Steuerung zur vollautomatisierten Bearbeitung der Platten vorgesehen ist,
- mit der die Vorschübe in der mindestens einen Bearbeitungsstation (5, 11) intermittierend mit verschiedenen Geschwindigkeitsstufen gefahren werden, wobei sich die Geschwindigkeitsstufen nach den jeweils kleinsten der maximal zulässigen Vorschubgeschwindigkeiten der gleichzeitig betätigten Bearbeitungsgeräte (7, 12; 8, 13) bestimmen, und dadurch, daß
- die Zufuhr- (1; 2) und Entnahmestationen (15, 16) so ausgebildet sind, daß sie die Platten von von Gabelstaplern handhabbaren Gebinden entnehmen bzw. zu solchen Gebinden stapeln.

2. Vorrichtung nach Anspruch 1,
dadurch gekennzeichnet, daß
die Vorschubgeschwindigkeiten in den Bearbeitungsstationen (5, 11) durch das Zu- bzw. Abschalten zusätzlicher Pumpleistung eines Hydraulikantriebs (6, 14) gesteuert werden.

3. Vorrichtung nach Anspruch 1 oder 2,
dadurch gekennzeichnet, daß
die Beschleunigungs- bzw. Verzögerungsintervalle der Vorschübe in den Bearbeitungsstationen durch Reduzierung des Unterschieds zwischen den maximalen Vorschubgeschwindigkeiten der Bearbeitungsgeräte (7, 8, 12, 13) minimierbar sind.

4. Vorrichtung nach einem der Ansprüche 1 bis 3,
dadurch gekennzeichnet, daß
die Vorbearbeitungsgeräte Vorritzer und Spaner (7, 12) sowie die Endbearbeitungsgeräte Falzfräser und Einsatzfräser (8, 13) zur Bearbeitung der in Vorschubrichtung verlaufenden Kantenbereiche der Platten zur Herstellung von Fälzen und Kanten bzw. zur Herstellung von in Vorschubrichtung verlaufenden Nuten umfassen.

5. Vorrichtung nach Anspruch 4,
dadurch gekennzeichnet, daß
die Einsatzfräser in Einheit mit ihrem Antrieb pneumatisch gegen die Unterseite der Platten gepreßt werden und mit einer Drehzahl von 18 000 - 24 000 U/min arbeiten.

6. Vorrichtung nach Anspruch 5,
dadurch gekennzeichnet, daß
die Einsatzfräser in Leichtbauweise mit einer gekapselten Antriebseinheit ausgeführt sind.

7. Vorrichtung nach Anspruch 6,
dadurch gekennzeichnet, daß
die Einsatzfräser eine einzige zum Radius versetzt angeordnete Schneidkante aufweisen, um eine ausreichend schnelle Spanentfernung zu gewährleisten.

8. Vorrichtung nach einem der Ansprüche 4 bis 7,
dadurch gekennzeichnet, daß
die Vorschubgeschwindigkeit bei alleiniger Kantenbearbeitung 15 bis 20 m/min beträgt und die Vorschubgeschwindigkeit bei zusätzlicher Nutenfräsung auf 4 bis 5 m/min reduziert ist.

9. Verfahren zur spanenden Bearbeitung von Platten, insbesondere aus verleimtem Sperrholz, Preßspan oder aus Kunststoffmaterialien, wobei
die Bearbeitung vollautomatisiert auf einer Bearbeitungsstrecke mit
- einer Plattenzuführstation 1; 2),
- mehreren Bearbeitungsstationen (5; 11),
- einer Fertigungsplatten-Entnahmestation (15, 16),
- einer Fördereinrichtung (4, 9; 10) zum Transport der zu bearbeitenden Platten zwischen den einzelnen Stationen erfolgt,
**dadurch gekennzeichnet,** daß
- zumindest eine Bearbeitungsstation (5, 11) Bearbeitungsgeräte (7, 8, 12, 13) zur zumindest abschnittsweise gleichzeitigen Ausführung unterschiedlicher Arbeitsgänge an den Platten in Vorschubrichtung aufweist, deren Werkzeuge jeweils mit einer Geschwindigkeit betrieben werden, die die für den speziellen Arbeitsgang maximale Vorschubgeschwindigkeit erlaubt, und daß
- die Vorschübe in der mindestens einen Bearbeitungsstation (5, 11) intermittierend mit verschiedenen Geschwindigkeitsstufen gefahren werden, wobei sich die Geschwindigkeitsstufen nach den jeweils kleinsten der maximal zulässigen Vorschubgeschwindigkeiten der gleichzeitig betätigten Bearbeitungsgeräte (7, 12; 8, 13) bestimmen.

10. Verfahren nach Anspruch 9,
dadurch gekennzeichnet, daß
Beschleunigungs- bzw. Verzögerungszeiten minimiert werden durch Minimierung der Differenz der einzelnenn maximalen Vorschubgeschwindigkeiten der Bearbeitungsgeräte.

## Claims

1. Apparatus for machining boards, in particular boards made of glued plywood, presspan or of plastics materials, having
- a board-supplying station (1; 2),
- a plurality of machining stations (5; 11),
- a finished board-discharging station (15, 16), and
- a conveying system (4, 9; 10) for transporting the boards to be machined between the individual stations,
characterised in that
- at least one machining station (5, 11) has machining devices (7, 8, 12, 13) for performing various operations on the boards in the direction of feed, at least at certain periods of time simultaneously, the tools of which machining devices are in each case operated at a speed which allows the maximum rate of feed for the specific operation,
- in that a control system is provided for the fully automated machining of the boards,
- with which control system the feeds in the at least one machining station (5, 11) are operated intermittently at different rates, the rates being governed by in each case the lowest of the maximum-permissible rates of feed of the simultaneously actuated machining devices (7, 12; 8, 13), and in that
- the supplying station (1; 2) and the discharging station (15, 16) are designed so that they remove the boards from bundles which can be handled by fork lift trucks and stack them so as to form such bundles, respectively.

2. Apparatus according to Claim 1, characterised in that the rates of feed in the machining stations (5, 11) are controlled by the connection and disconnection of additional pumping capacity of a hydraulic drive (6, 14).

3. Apparatus according to Claim 1 or 2, characterised in that the acceleration and deceleration intervals of the feeds in the machining stations can be minimised by reducing the difference between the maximum rates of feed of the machining devices (7, 8, 12, 13).

4. Apparatus according to one of Claims 1 to 3, characterised in that the pre-machining devices comprise scoring and machining tools (7, 12) and the finishing devices comprise rebating cutters and grooving cutters (8, 13) for machining the edge regions, running in the direction of feed, of the boards in order to produce rebates and edges and for the production of grooves, running in the direction of feed, respectively.

5. Apparatus according to Claim 4, characterised in that the grooving cutters, as a unit with their drive, are pneumatically pressed against the underside of the boards and work at a rotational speed of 18,000 - 24,000 rpm.

6. Apparatus according to Claim 5, characterised in that the grooving cutters are of lightweight design with an enclosed drive unit.

7. Apparatus according to Claim 6, characterised in that the grooving cutters have a single cutting edge arranged offset with respect to the radius, in order to ensure sufficiently rapid chip removal.

8. Apparatus according to one of Claims 4 to 7, characterised in that the rate of feed in the case of edge machining alone is 15 to 20 m/min and the rate of feed in the case of additional groove cutting is reduced to 4 to 5 m/min.

9. Process for machining boards, in particular boards made of glued plywood, presspan or of plastics materials, in which the machining is carried out in a fully automated manner in a machining section having
- a board-supplying station (1; 2),
- a plurality of machining stations (5; 11),
- a finished board-discharging station (15, 16),
- a conveying system (4, 9; 10) for transporting the boards
to be machined between the individual stations, characterised in that
- at least one machining station (5, 11) has machining devices (7, 8, 12, 13) for performing various operations on the boards in the direction of feed, at least at certain periods of time simultaneously, the tools of which machining devices are in each case operated at a speed which allows the maximum rate of feed for the specific operation, and in that
- the feeds in the at least one machining station (5, 11) are operated intermittently at different rates, the rates being governed by in each case the lowest of the maximum-permissible rates of feed of the simultaneously actuated machining devices (7, 12; 8, 13).

10. Process according to Claim 9, characterised in that acceleration and deceleration times are minimised by minimising the difference of the individual maximum rates of feed of the machining devices.

## Revendications

1. Dispositif pour l'usinage par enlèvement de copeaux de plaques, en particulier de contre-plaqué collé, de presspahn ou de matières plastiques, comprenant
- un poste d'amenée des plaques (1; 2),
- plusieurs postes d'usinage (5; 11),
- un poste de prélèvement des plaques finies (15; 16), et
- une installation de convoyage (4, 9; 10) pour le transport des plaques à usiner entre les différents postes, caractérisé en ce que
- au moins un poste d'usinage (5, 11) présente des appareils d'usinage (7, 8, 12, 13) pour l'exécution simultanée, au moins par sections, de différentes opérations sur les plaques dans le sens d'avancée, dont les outils sont à chaque fois actionnés avec une vitesse qui permet la vitesse maximale d'avancée pour l'opération particulière concernée,
- en ce qu'une commande pour un usinage entièrement automatique des plaques est prévue,
- à l'aide de laquelle les avancées, sur au moins un des postes d'usinage (5, 11), sont réalisées de manière intermittente dans différentes plages de vitesse, les plages de vitesse se déterminant en fonction respectivement de la plus petite des vitesses d'avancée maximales admissibles des appareils d'usinage (7, 12; 8, 13) simultanément actionnés, et en ce que
les postes d'amenée (1; 2) et de prélèvement (15, 16) sont conçus de telle façon qu'ils prélèvent les plaques dans des fardeaux manipulables par des chariots élévateurs à fourche et les constituent en fardeaux par empilage.

2. Dispositif selon la revendication 1, caractérisé en ce que les vitesses d'avancée dans les postes d'usinage (5, 11) sont commandées par la mise en oeuvre et l'arrêt d'un débit de pompage additionnel d'une commande hydraulique (6, 14).

3. Dispositif selon la revendication 1 ou 2, caractérisé en ce que les intervalles d'accélération ou de ralentissement des avancées dans les postes d'usinage peuvent être réduits au minimum par la réduction de la différence entre les vitesses d'avancée maximales des appareils d'usinage (7, 8, 12, 13).

4. Dispositif selon l'une des revendications 1 à 3, caractérisé en ce que les appareils d'usinage de dégrossissage comprennent des outils de rainurage d'ébauche et des outils travaillant par enlèvement de copeaux (7, 12) et les appareils d'usinage de finition des fraises à feuilleret et des fraises tourteaux (8, 13) pour l'usinage des zones de rive des plaques orientées dans le sens de l'avancée, pour la réalisation de feuillures et de bords, et pour la réalisation de rainures orientées dans le sens de l'avancée.

5. Dispositif selon la revendication 4, caractérisé en ce que les fraises tourteaux sont appliquées, par action pneumatique, conjointement à leur commande, contre la face inférieure des plaques et travaillent à une vitesse de rotation comprise entre 18.000 et 24.000 t/mn.

6. Dispositif selon la revendication 5, caractérisé en ce que les fraises tourteaux sont réalisées en version légère, avec une unité de commande entièrement fermée.

7. Dispositif selon la revendication 6, caractérisé en ce que les fraises tourteaux comportent une seule arête de coupe disposée décalée par rapport au rayon, pour garantir une évacuation suffisamment rapide des copeaux.

8. Dispositif selon l'une des revendications 4 à 7, caractérisé en ce que la vitesse d'avancée est de l'ordre de 15 à 20 m/mn lors de l'usinage des rives uniquement, et en ce que la vitesse d'avancée, lorsqu'un fraisage de rainures est en outre effectué, est ramenée à 4 à 5 m/mn.

9. Procédé pour l'usinage par enlèvement de copeaux de plaques, en particulier de contre-plaqué collé, de presspahn ou de matières plastiques, l'usinage s'effectuant de façon entièrement automatique sur une ligne d'usinage comprenant
- un poste d'amenée des plaques (1; 2),
- plusieurs postes d'usinage (5; 11),
- un poste de prélèvement des plaques finies (15; 16), et
- une installation de convoyage (4, 9; 10) pour le transport des plaques à usiner entre les différents postes, caractérisé en ce que
- au moins un poste d'usinage (5, 11) comporte des appareils d'usinage (7, 8, 12, 13) pour l'exécution simultanée, au moins par sections, de différentes opérations sur les plaques dans le sens d'avancée, dont les outils sont respectivement actionnés avec une vitesse qui permet la vitesse maximale d'avancée pour l'opération particulière concernée, et en ce que
- les avancées, sur au moins un des postes d'usinage (5, 11), sont réalisées de manière intermittente dans différentes plages de vitesse, les plages de vitesse se déterminant en fonction respectivement de la plus petite des vitesses d'avancée maximales admissibles des appareils d'usinage (7, 12; 8, 13) simultanément actionnés.

10. Procédé selon la revendication 9, caractérisé en ce que les temps d'accélération et de ralentissement peuvent être réduits au minimum en réduisant au minimum la différence entre les vitesses d'avancée maximales individuelles des appareils d'usinage.
